(19) Europäisches Patentamt
European Patent Office
Office européen des brevets

(11) **EP 4 175 159 A1**

(12) **EUROPÄISCHE PATENTANMELDUNG**

(43) Veröffentlichungstag:
**03.05.2023 Patentblatt 2023/18**

(51) Internationale Patentklassifikation (IPC):
***H02N 2/04*** *(2006.01)* ***A61C 17/34*** *(2006.01)*

(21) Anmeldenummer: **21205649.3**

(22) Anmeldetag: **29.10.2021**

(52) Gemeinsame Patentklassifikation (CPC):
**H02N 2/046; A61C 17/16; A61C 17/20; A61C 17/32**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Curaden AG**
**6010 Kriens (CH)**

(72) Erfinder:
• **BREITSCHMID, Ulrich**
**6045 Meggen (CH)**
• **LANTER, Joshua**
**6403 Küssnacht am Rigi (CH)**

(74) Vertreter: **Keller Schneider**
**Patent- und Markenanwälte AG**
**Eigerstrasse 2**
**Postfach**
**3000 Bern 14 (CH)**

(54) **PIEZOELEKTRISCHER ANTRIEB**

(57)    Ein piezoelektrischer Antrieb (100) zur Erzeugung einer Rotationsbewegung, insbesondere zur Erzeugung einer Rotationsschwingung, umfasst ein piezoelektrisches Element (120), womit bei elektrischer Aktivierung eine Längenänderung in einer X-Richtung erfolgt, wobei am piezoelektrisches Element (120) ein erster Federbügel (110) derart angebracht ist, dass die Längenänderung in einen ersten Bügelhub in einer Y-Richtung umgesetzt ist. Der erste Federbügel (110) ist über ein Verbindungselement (130) derart mit einer rotierbaren Welle (140) verbunden, dass der erste Bügelhub in eine Rotationsbewegung der Welle (140) umgesetzt ist. Ein Griff mit einer Antriebseinheit für eine Schallzahnbürste umfasst ein piezoelektrisches Element (120), womit bei elektrischer Aktivierung eine Längenänderung in einer X-Richtung erfolgt, und ein Umlenkgetriebe, wobei die Längenänderung des piezoelektrischen Elements (120) über das Umlenkgetriebe in eine Rotationsbewegung einer Welle (140) für einen Bürstenkopf umgesetzt ist.

Fig. 1a

EP 4 175 159 A1

**Beschreibung**

**Technisches Gebiet**

Die Erfindung betrifft einen Piezoelektrischen Antrieb zur Erzeugung einer Rotationsbewegung, umfassend ein piezoelektrisches Element, womit bei elektrischer Aktivierung eine Längenänderung in einer X-Richtung erfolgt. Weiter betrifft die Erfindung einen Griff mit einer Antriebseinheit für eine Schallzahnbürste, umfassend ein piezoelektrisches Element.

**Stand der Technik**

Zahnbürsten, bei welchen ein Reinigungselement motorisch bewegt wird, sind seit langem bekannt. Als Antrieb werden unter anderem Elektromotoren, Elektromagnete sowie piezoelektrische Elemente verwendet. Studien haben gezeigt, dass mit sogenannten Elektrozahnbürsten gegenüber den Handzahnbürsten eine wesentlich bessere Reinigungswirkung erzielt werden kann.

Es gibt unterschiedliche Arten von elektrisch angetriebenen Zahnbürsten.

Aus den Druckschriften DE 10 2016 011477 (Schiffer), EP 2'454'967 A1 (Braun), WO 2005 046508 A1 (Trisa) und anderen ist das Prinzip des runden Bürstenkopfs bekannt, der um eine Achse parallel zu der Borstenrichtung rotieren kann und um diese Achse hin und her bewegt wird. Der Vorteil dieser Anordnung ist, dass der bewegte Teil (nämlich der runde Bürstenkopf) sehr klein ist. Es braucht nicht viel Antriebsenergie und die auftretenden Kräfte (Drehmomente) sind tendenziell klein. Der Nachteil dieses Prinzips liegt darin, dass die Borstenbewegung abhängig ist von der Distanz zur Rotationsachse. Je näher die Borsten zur Achse des Bürstenkopfs sind, desto geringer ist die Hin- und HerBewegung. Das Bewegungsmuster ist also sehr inhomogen verteilt über das Borstenfeld.

Aus den Druckschriften JP H04-43127 (Kao), US 2006 168744 A1 (Butler), US 2012/0291212 (Montagnino) und anderen ist das Prinzip der Pendelbewegung bekannt. Dabei pendelt die Bürste um eine Pendelachse, die senkrecht zum Handapparat (Antrieb) und zur aufgesetzten Bürste steht und die die Längserstreckungsachse von Handapparat und Bürste am Ort der Kopplung der Bürste an den Handapparat schneidet. Der Vorteil ist, dass die Bewegungsintensität über das ganze Borstenfeld homogen verteilt ist. Alle Borsten haben nämlich mehr oder weniger den gleichen Abstand von der Pendelachse. Der Nachteil besteht allerdings darin, dass relativ grosse Kräfte (Momente) auftreten, weil der Bürstenkopf mit seiner Masse relativ weit von der Pendelachse entfernt ist.

Aus den Druckschriften JP 2012-161368 (Sanion), DE 299 13 406 U1 (Rowenta), US 6,766,548 B1 (Rowenta), WO 2005 046508 A1 (Trisa), WO 2013/104020 A1 (Erskine) und anderen ist das Prinzip der Gehäusevibration bekannt. Ein Antrieb im Handapparat oder im Bürstenhals erzeugt eine nicht näher definierte Vibration, die sich auf die Borsten überträgt. Der Vorteil dieser Konstruktion ist, dass man sich nicht mit den technischen Details der Bewegungsübertragung befassen muss. Der Nachteil ist aber, dass man das ganze Gehäuse vibrieren muss und dass entsprechend mehr Antriebsenergie benötigt wird, als wenn nur ein kleiner Teil in Vibration versetzt werden muss. Zudem darf die Vibration nicht zu stark sein, weil das den Komfort beim Halten des Handapparats beeinträchtigt. Schliesslich sind die effektiven Bewegungen der Borsten nicht bekannt und die Wirkung der Reinigung dieser Art von undefinierter und unkontrollierter Vibration ist alles andere als optimal.

Eine weiteres Prinzip ist aus den Druckschriften WO 2012-151259 A1 (Water Pik), EP 2'548'531 B1 (Trisa) und anderen bekannt. Hier hat der Handapparat einen Kopplungsstift, der sich um die Längsachse hin und her dreht. Die auf den Kopplungsstift aufgesetzte Bürste hat einen geraden Hals und am Ende eine Borstenplatte, von der die Borsten quer zur Längsachse des Handapparats bzw. des Bürstenhalses stehen. Der Vorteil dieser Geometrie besteht darin, dass relativ geringe Kräfte (Momente) auftreten, weil die Masse (Hals, Borstenplatte) der Aufsatzbürste relativ nahe bei der Längsachse (Bewegungszentrum) ist. Auch ist die Bewegungsintensität relativ gleichmässig über das Borstenfeld verteilt. Der Nachteil dieses Prinzips ist jedoch, dass die Borsten nur eine eindimensionale Bewegung (hin und her) ausführen. Zum einen ist dadurch der Aufschäumeffekt für die Zahnpasta unbefriedigend und zum anderen fehlt der Vorteil der kreisenden und damit schonenden und gleichzeitig effizienten Bewegung, die von den Spezialisten im Zusammenhang mit der Handzahnbürste seit Jahrzehnten als vorteilhaft gelehrt wird.

Die DE 40 02199 A1 zeigt eine Zahnbürste, welche bewegt wird, indem die die Dimensionsänderung eines Piezokristalls mit dem einen Ende eines Pendelstabs abgetastet wird. Da der Pendelstab um eine Achse, welche quer zur Stabrichtung steht, drehen kann, führt die Bürste am gegenüberliegenden Ende des Pendelstabs eine seitliche Pendelbewegung aus.

Die bekannten Antriebe mit Piezo-Elementen haben den Nachteil, dass nur geringe Kräfte/Drehmomente ausführbar sind, so dass bei erhöhtem Druck auf das Borstenfeld die Amplitude verringert wird, womit wiederum die Reinigungsleistung abnimmt.

**Darstellung der Erfindung**

Aufgabe der Erfindung ist es, eine dem eingangs genannten technischen Gebiet zugehörige piezoelektrischer Antrieb zur Erzeugung einer Rotationsbewegung zu schaffen, welcher sich durch ein erhöhtes Drehmoment auszeichnet.

Die Lösung der Aufgabe ist durch die Merkmale des Anspruchs 1 definiert. Gemäss der Erfindung ist am piezoelektrischen Element ein erster Federbügel derart angebracht, dass die Längenänderung in einen Bügelhub in einer Y-Richtung umgesetzt ist, wobei der Federbügel über ein Verbindungselement derart mit einer rotierbaren Welle verbunden ist, dass der Bügelhub in eine Rotationsbewegung der Welle umgesetzt ist.

Die Längenänderung des piezoelektrischen Elements wird über einen Federbügel in einen Bügelhub umgesetzt. Durch eine geeignete Dimensionierung des Bügels kann damit eine ideale Transformation der Längenänderung des piezoelektrischen Elements in eine Hubbewegung umgesetzt werden. Damit kann einerseits der Hub zum Rotieren der Welle und anderseits das Drehmoment der Welle optimiert werden. Im Gegensatz zur Pendelbewegung kann durch die Rotation der Welle die bewegte Masse respektive eine Auslenkung der Masse gering gehalten werden, womit ein energetisch sparsamer Antrieb geschaffen wird. Weiter wird damit ein besonders schnell ansteuerbarer Antrieb zum Erzeugen einer Rotationsschwingung geschaffen, womit wiederum präzise Pulse erzeugt werden können (z.B. Rechteckpulse, Sinusschwingungen etc.). So können zum Beispiel je nach Anwendung des Antriebs unterschiedliche Schwingungsverhalten der Rotationsschwingung erzeugt werden. Bei einer Verwendung des Antriebs als Zahnbürste können damit zum Beispiel unterschiedliche Reinigungsmodi vorgesehen sein.

Der Federbügel kann auf unterschiedliche Arten realisiert sein. Einerseits kann die Eigenschaft des Federbügels über dessen Geometrie (siehe weiter unten) und anderseits über die Materialwahl variiert werden. Vorzugsweise ist der Federbügel als bogenartiger Federstab oder als gekrümmtes Federblatt ausgebildet. Besonders bevorzugt umfasst der Federbügel ein U-förmiges Element. Das U-förmige Element ist vorzugsweise über die beiden freien Enden mit dem piezoelektrischen Element derart verbunden, dass durch eine Längenänderung des piezoelektrischen Elements in X-Richtung sich ein Abstand zwischen den freien Enden des U-förmigen Elements ändert. Der Federbügel umfasst vorzugsweise ein federndes bandförmiges Material, welches eine U-Form aufweist.

Der piezoelektrische Antrieb kann für unterschiedliche Zwecke eingesetzt werden. Zum Beispiel kann damit ein Zahnbürstenkopf angetrieben werden. Diese kann mit dem Antrieb um eine Achse rotiert werden, zum Beispiel um eine zu einer Borstenadapterplatte (d.h. einer Adapterplatte, an welcher die Filamente der Zahnbürste befestigt sind) senkrechten und/oder parallelen Achse. Bei einer Rotation um die senkrechte Achse kann der Bürstenkörper in eine Rotationsbewegung in eine Richtung versetzt werden oder auch oszilliert werden. Bei einer Rotation des Bürstenkopfs um eine Achse parallel zur Borstenadapterplatte wird vorzugsweise eine oszillierende Bewegung erzeugt, wobei die Achse vorzugsweise parallel zu einem Bürstenhals ausgerichtet ist, so dass der Bürstenkörper eine Schwenkbewegung respektive eine Wischbewegung auf dem Zahn ausführt.

Weiter kann der Antrieb auch in Vorrichtungen zur Gesichtspflege eingesetzt werden, wobei ein Pflegeelement in eine Schallbewegung versetzt wird. Die Vorrichtung zur Gesichtspflege kann zum Beispiel ein Gesichtsreiniger, ein Peelinggerät oder dergleichen umfassen.

Der Antrieb kann aber auch zum Beispiel für Anwendungen in der Mikrotechnik, zum Beispiel in Bohrvorrichtungen zum Rotieren eines Bohrers eingesetzt werden. Weiter kann der Antrieb zum Antreiben einer Schleifvorrichtung oder ähnliches eingesetzt werden. Der Antrieb kann weiter als Mikroantrieb in der Robotik, zum Beispiel als Greifer, Bewegungsantrieb, Schneidwerkzeug etc. für die Chirurgie oder dergleichen eingesetzt werden. Der Antrieb auch zum Beispiel als Antrieb eines mechanischen Uhrwerks eingesetzt werden. Dem Fachmann sind weitere Anwendungen bekannt, bei welchen die erfindungsgemässe Erzeugung der Rotationsbewegung aus einer Längenänderung eines piezoelektrischen Elements eingesetzt werden können.

Unter Rotationsbewegung wird eine Bewegung um eine Achse verstanden, welche insbesondere einen Rotationswinkel von mehr als 1°, insbesondere nicht mehr als 5°, vorzugsweise von mehr als 2°, insbesondere nicht mehr als 3° aufweist. Die Amplitude wird dabei auf die Ruhelage bzw. Mittellage von 0° bezogen. Besonders bevorzugt handelt es sich bei der Rotationsbewegung um eine Schwingungsbewegung, insbesondere um eine Rotationsschwingung, welche zum Beispiel eine Amplitude von 1° bis 5°, vorzugsweise von 2° bis 3° aufweist. Unter einer Rotationsschwingung wird eine alternierende Drehung um eine Rotationsachse verstanden, welche zum Beispiel bei Ankerhemmungen von Penduluhren bekannt sind. Damit können in der Anwendung, zum Beispiel als Antrieb für eine Zahnbürste, besonders effektive Bewegungen eines Bürstenkörpers für eine optimale Reinigungswirkung erreicht werden, wobei zum Beispiel die Rotationsachse parallel zum Bürstenhals der Zahnbürste oder rechtwinklig zu einem Borstenfeld (Rotationszahnbürste) ausgerichtet ist. In Varianten kann der Rotationswinkel aber auch weniger als 5° aufweisen.

Das Verbindungselement überträgt die Bewegung des Federbügels an die Welle. Dazu ist das Verbindungselement aussermittig mit der Welle fest oder lösbar verbunden. Der Rotationswinkel ist dabei abhängig vom Hub des Federbügels und vom Abstand eines Angriffspunktes des Verbindungselements zur Rotationsachse der Welle. Der Hub des Federbügels kann zum Beispiel einem doppelten Abstand des Angriffspunktes des Verbindungselements zur Rotationsachse der Welle entsprechen, womit ein Kurbeltrieb erreicht wird, bei welchem eine kontinuierliche Rotation der Welle erreicht werden kann. In einer weiteren Variante kann der Hub kleiner gewählt sein, womit eine oszillierende Bewegung der Welle erreicht werden kann (siehe unten).

Vorzugsweise liegt die Längenänderung des piezoelektrischen Elements, insbesondere in der Anwendung bei Zahnbürsten, in einem Bereich von 50 bis 500 Mikrometer, besonders bevorzugt zwischen 100 und 300 Mikrometer, insbesondere bevorzugt zwischen 150 und 250 Mikrometer. Einerseits kann mit einer grossen Längenänderung ein entsprechend grosser Bügelhub erreicht werden. Andererseits ist mit grösserer Längenänderung auch das piezoelektrische Element grösser dimensioniert, was wiederum einer kompakten Bauweise entgegen läuft. Es hat sich nun gezeigt, dass mit den obigen Bereichen der Längenänderung ein idealer Kompromiss zwischen Baugrösse und Leistung erreicht werden kann.

Bevorzugt weist die Welle eine Rotationsachse auf, welche in einer zur x-Richtung parallelen Ebene liegt, vorzugsweise parallel zur X-Richtung ausgerichtet ist. Das piezoelektrische Element weist typischerweise in der Richtung der Längenänderung die grösste Abmessung auf. Ebenso weist typischerweise die Welle in Richtung der Wellenachse die grösste Abmessung auf. Durch die parallele Ausrichtung können diese beiden Bauteile des Antriebs in einem geringen Volumen untergebracht werden, womit ein besonders kompakter Antrieb erreicht wird.

In Varianten können die Welle und das piezoelektrische Element auch anderweitig angeordnet sein. Insbesondere bei einer Anwendung des Antriebs in einer Zahnbürste können durch eine zur Rotationsachse schräge Anordnung des Verbindungselements zum Beispiel Z-Bewegungen eines Bürstenkopfs erreicht werden.

Vorzugsweise ist gegenüber dem ersten Federbügel am piezoelektrischen Element ein zweiter Federbügel vorgesehen ist. Der zweite Bügelhub des zweiten Federbügels ist vorzugsweise in Richtung des ersten Bügelhubs des ersten Federbügels ausgerichtet.

Damit wird die maximale Vergrösserung des Hubs als Summe des ersten Bügelhubs und des zweiten Bügelhubs erreicht. Weiter können Biegekräfte auf das piezoelektrische Element vermieden werden. In der Ausführungsform mit genau einem Federbügel ist vorzugsweise das piezoelektrische Element relativ zur rotierbaren Welle ortsfest angeordnet, während bei der Ausführungsform mit zwei gegenüberliegenden, insbesondere spiegelsymmetrisch angeordneten Federbügeln, der zweite Federbügel, genauer gesagt ein Bereich des zweiten Federbügels relativ zur rotierbaren Welle ortsfest angeordnet, Dem Fachmann ist klar, dass in der Ausführungsform mit genau einem Federbügel statt des piezoelektrischen Elements auch ein Bereich des ersten Federbügels relativ zur rotierbaren Welle ortsfest angeordnet und das piezoelektrische Element über das Verbindungselement mit der rotierbaren Welle verbunden sein kann, womit durch die Längenänderung des piezoelektrischen Elements über den Bügelhub das piezoelektrische Element selbst relativ zur rotierbaren Welle bewegt wird. In dieser Variante ist der Federbügel indirekt (über das piezoelektrische Element) über das Verbindungselement mit der rotierbaren Welle verbunden. Bevorzugt ist in der Ausführungsform mit genau einem Federbügel aber der Federbügel direkt mit dem Verbindungselement verbunden.

In Varianten kann der zweite Federbügel auch in eine andere Richtung ausgerichtet sein. Die Richtung des ersten Bügelhubs und die Richtung des zweiten Bügelhubs können zum Beispiel einen Winkel von 90° oder einen Winkel von 45° einschliessen. Damit können mit einem einzigen piezoelektrischen Element mehrere Hübe in unterschiedliche Richtungen erreicht werden, womit mit einem einzigen piezoelektrischen Element mehrere Wellen in eine Rotationsbewegung versetzt werden können.

In Varianten kann auf den zweiten Federbügel auch verzichtet werden. Damit kann das piezoelektrische Element quer zur X-Richtung fixiert werden, womit der Antrieb einfacher und kostengünstiger aufgebaut werden kann. Der erste Federbügel kann auch derart dimensioniert sein, dass ohne einen weiteren Federbügel der gewünschte Hub erreicht werden kann.

Vorzugsweise umfasst der erste Federbügel zwei Schenkel, welche eine Basisseite einschliessen, wobei eine Länge des piezoelektrischen Elements grösser ist als die Basisseite. Der Federbügel weist damit zusammenmit dem piezoelektrischen Element vorzugsweise die Form eines Trapezes, besonders bevorzugt eines gleichschenkligen Trapezes auf, wobei die Basisseite parallel zum piezoelektrischen Element respektive der X-Richtung verläuft.

Die Hubhöhe h in Abhängigkeit der Länge des piezoelektrischen Elements x sowie der Basisseite c und den beiden Schenkel b berechnet sich wie folgt (bei einem idealisierten Federbügel mit starren Schenkel und starrer Basisseite):

$$h(x) = \sqrt{b^2 - \frac{(x-c)^2}{4}}$$

Die Basisseite c ist für den Hub nicht relevant, jedoch als Basis für die Verbindung mit dem Verbindungselement hilfreich. Grundsätzlich kann somit auf die Basisseite auch verzichtet werden.

Die erste Ableitung von h ergibt folgendes:

$$h'(x) = \frac{x-c}{4h(x)}$$

Die Änderungsrate ist somit gross, wenn h(x) gegen 0 geht. Dies ist der Fall, wenn x-c gegen 2b geht respektive wenn die Länge des piezoelektrischen Elements abzüglich der Basisseite sich von unten an die doppelte Länge der beiden Schenkel annähert. Somit kann mit dem Federbügel bei besonders kompakter Bauweise ein maximaler Bügelhub erreicht werden. Offensichtlich ist es für einen grossen Bügelhub von Vorteil, wenn die Basisseite c klein gewählt wird.

Sofern jedoch das Drehmoment der Rotationsbewegung höher gewichtet werden soll, können die beiden Schenkel auch grösser gewählt werden.

Grundsätzlich müssen die Schenkel nicht zwingend gerade sein, sondern können auch andere Formen aufweisen (gebogen etc.). Relevant sind lediglich die Schwenkpunkte zwischen den Schenkel respektive den Schenkel und dem zwischen einem Schenkel und dem piezoelektrischen Element. Weiter kann auf die Trapezform auch verzichtet werden.

Stattdessen kann auch ein bogenförmiges Element oder dergleichen als Federbügel vorgesehen sein.

Vorzugsweise ist der Federbügel aus einem Stahl ausgebildet. In varianten kann der Federbügel auch aus einem Kunststoff oder einem Verbundmanterial gefertigt sein.

Vorzugsweise ist die Basisseite parallel zur X-Richtung ausgerichtet. Bei zwei gleich langen Schenkel wird damit ein Bügelhub rechtwinklig zur X-Richtung erreicht. Damit wird ein geradliniger Hub erreicht, welcher besonders einfach in eine Rotationsbewegung umsetzbar ist.

In Varianten kann die Basisseite zur X-Richtung auch einen Winkel ungleich Null einschliessen. Damit können komplexere Bewegungen, zum Beispiel eine Z-Bewegung, erzeugt werden, welche insbesondere in der Anwendung als Zahnbürste zu einem guten Reinigungsergebnis führen kann.

Vorzugsweise umfasst das Verbindungselement eine Feder. Mit der Feder kann das Schwingungsverhalten unterstützt werden. Die Feder bringt auch den Vorteil, dass Kräfte, welche von aussen auf die Welle wirken, durch die Feder aufgenommen werden können, womit der Antrieb geschont werden kann. Weiter können damit die durch das piezoelektrische Element erzeugten Schwingungen moduliert werden, womit in der Anwendung als Zahnbürste eine schonendere Bewegung (geringere Beschleunigungen) des Bürstenkopfs erreicht werden können.

In Varianten kann das Verbindungselement auch starr ausgebildet sein. Weiter kann der Bügelhub auch anderweitig in eine Rotationsbewegung der Welle übertragen werden, zum Beispiel über eine Zahnrad/Zahnstangen-Verbindung. Weiter kann die Welle mit einer Aufzugsfeder beaufschlagt werden, womit die Rotation einzig über eine Zugkraft des Bügelhubs erreicht werden kann. Damit kann ein Verbindungselement auch als flexibles und nichtelastisches Element (z.B. eine Schnur) ausgebildet sein. Dem Fachmann sind weiter Möglichkeiten bekannt.

Bevorzugt ist die Feder als Federblech ausgebildet. Unter einem Federblech wird vorliegend ein streifenförmiges Element verstanden, welches aus einem federnden Material, insbesondere aus Stahl oder dergleichen besteht. Das Federblech muss im entspannten Zustand nicht zwingend eben ausgebildet sein, sondern kann auch gebogen sein, eine Zickzack-Form aufweisen oder anderweitig geformt sein. Über die Form und die Materialwahl kann die Federwirkung eingestellt werden.

Mit dem Federblech wird eine besonders einfache und kostengünstige Feder bereitgestellt. Zudem kann mit dem Federblech in einfacher Weise über eine Längskante eine Verbindung mit der Welle geschaffen werden.

In Varianten kann statt des Federblechs auch eine Schraubenfeder, ein zugelastisches Element oder dergleichen eingesetzt werden.

Das Federblech ist in der bevorzugten Ausführungsform gebogen, so dass Kräfte in beide Richtungen gut aufgenommen und Schwingungen gut übertragen werden können. In Varianten kann das Federblech auch gerade sein.

Vorzugsweise ist das Federblech exzentrisch mit der Welle fest verbunden. Damit wird in besonders einfacher Weise eine Umsetzung des Bügelhubs in eine Rotationsbewegung erreicht. Besonders bevorzugt ist das Federblech direkt und fest mit der Welle verbunden. Damit kann mit geringem Hub eine Rotationsbeweg um einen relativ grossen Winkel erreicht werden.

In Varianten kann die Welle auch einen radial ausgerichteten Hebel umfassen, an welchem das die Feder respektive das Federblech angreift. der Bügelhub auch anderweitig in eine Rotationsbewegung der Welle übertragen werden, zum Beispiel über eine Zahnrad/Zahnstangen-Verbindung. Weiter kann die Welle mit einer Aufzugsfeder beaufschlagt werden, womit die Rotation einzig über eine Zugkraft des Bügelhubs erreicht werden kann. Damit kann ein Verbindungselement auch als flexibles und nichtelastisches Element (z.B. eine Schnur) ausgebildet sein. Dem Fachmann sind weiter Möglichkeiten bekannt.

Der piezoelektrische Antrieb kann in unterschiedlichen Gebieten eingesetzt werden. In einer bevorzugten Ausführungsform wird der piezoelektrische Antrieb in einem Griff mit einer Antriebseinheit für Körperpflegegeräte, insbesondere Reinigungsgeräte für Hautpflege und Zahnpflege eingesetzt. Der piezoelektrische Antrieb umfasst ein piezoelektrisches Element, womit bei elektrischer Aktivierung eine Längenänderung in einer X-Richtung erfolgt, und ein Umlenkgetriebe, wobei die Längenänderung des piezoelektrischen Elements über das Umlenkgetriebe in eine Rotationsbewegung einer Welle für einen Bürstenkopf umgesetzt ist, wobei die Welle insbesondere in der X-Richtung ausgerichtet ist.

In der bevorzugten Ausführungsform ist der piezoelektrische Antrieb im Griff des Körperpflegegeräts, insbesondere des Reinigungsgeräts für Hautpflege und Zahnpflege, insbesondere bevorzugt der Schallzahnbürste gemäss der obigen Beschreibung ausgebildet und umfasst ein piezoelektrisches Element, womit bei elektrischer Aktivierung eine Längenänderung in einer X-Richtung ausführbar ist, wobei am piezoelektrisches Element ein erster Federbügel derart angebracht ist, dass die Längenänderung in einen Bügelhub in einer Y-Richtung umsetzbar ist, wobei der Federbügel über ein Verbindungselement derart mit einer rotierbaren Welle verbunden ist, dass der Bügelhub in eine Rotationsbewegung der Welle umsetzbar ist.

In weiteren Ausführungsformen kann das piezoelektrische Element in einem einfachen Fall direkt exzentrisch mit der Welle verbunden sein, womit eine Längenänderung des piezoelektrischen Elements in X-Richtung direkt in eine Rotationsbewegung der Welle umgesetzt wird. Aufgrund der typischerweise geringen Hübe von piezoelektrischen Elementen müsste dazu das piezoelektrische Element nahe an der Rotationsachse der Welle angreifen, um eine hinreichend Rotationsbewegung ausführen zu können. Weiter kann das piezoelektrische Element über ein Verbindungselement exzentrische mit der Welle verbunden. In diesen Fällen kann das piezoelektrische Element rechtwinklig zur Rotationsachse der Welle ausgerichtet sein. In weiteren Ausführungsformen kann das piezoelektrische Element auch anderweitig zur Welle ausgerichtet sein. Der piezoelektrische Antrieb kann weiter ein Umlenkgetriebe umfassen, womit das piezoelektrische Element parallel zur Welle angeordnet werden kann. Weiter kann ein Winkelgetriebe oder dergleichen vorgesehen sein, um die Längenänderung des piezoelektrischen Elements in eine Rotation der Welle umzusetzen. Dem Fachmann sind weitere Möglichkeiten bekannt.

Vorzugsweise ist die Welle mit einem Bürstenhals eines Reinigungsgeräts, insbesondere einer Schallzahnbürste verbunden, so dass der Bürstenhals um eine Bürstenhalsachse die Rotationsbewegung ausführt. Besonders bevorzugt ist die Bürstenhalsachse koaxial zur Rotationsachse der Welle ausgerichtet. Damit können mit den Büscheln, welche vorzugsweise im Wesentlichen rechtwinklig zur Bürstenhalsachse ausgerichtet sind, in eine Wischbewegung versetzt werden, womit in besonders optimaler Weise eine Reinigung, insbesondere eine Zahnreinigung erreicht werden kann. In Varianten kann zwischen der Welle und der Bürstenhalsachse auch ein weiteres Umlenkgetriebe vorgesehen sein. Weiter kann mittels der Welle auch ein Borstenfeld um eine in Borstenrichtung ausgerichtete Achse rotiert werden.

Bevorzugt weist das Reinigungsgerät, insbesondere die Schallzahnbürste einen Schwingungserzeuger mit einem Stift zum Einführen in den Adapter auf, wobei mit dem Stift eine Schwingung vom Schwingungserzeuger zum Reinigungselement übertragbar ist. Mit dem Stift ist vorzugsweise eine Schwingung um die Stiftachse respektive um die X-Richtung auf das Reinigungselement übertragbar. In Varianten kann auch eine Schwingung in der Stiftachse respektive in der X-Richtung erfolgen. Damit wird eine besonders effiziente Schwingungsübertragung erreicht. Der Schwingungserzeuger kann zum Beispiel mit einem oder mehreren Piezoelementen oder mit Elektromagneten realisiert sein. Besonders bevorzugt umfasst der Schwingungserzeuger einen obig beschriebenen piezoelektrischen Antrieb. Weiter bevorzugt wird die Schwingung ausschliesslich über den Stift an das Reinigungsmittel übertragen. In diesem Fall kontaktiert der Bürstenaufsatz ausschliesslich den Stift des Schwingungserzeugers und damit kein weiteren Teile des Griffs. Insbesondere steht das Gehäuse im Betrieb der Schallzahnbürste respektive des Körperpflegegeräts vorzugsweise ausschliesslich mit dem Stift in Kontakt mit dem Bürstenaufsatz.

In Varianten kann auch der Bürstenkopf den Stift umfassen. Weiter sind dem Fachmann auch andere Übertragungsmittel für die Schwingung bekannt. Insbesondere kann statt eines Stifts auch ein Bajonettverschluss oder andere dem Fachmann bekannte Verbindungstechniken eingesetzt werden.

Vorzugsweise sind der Adapter und der Stift derart ausgebildet, dass bei in den Adapter eingeführtem Stift eine Verdrehsicherung und eine Fixierung in der Adapterachse erreichbar sind. Damit dienen der Stift und der Adapter nicht nur zur Übertragung der Schwingungen, sondern auch der Montage des Bürstenkopfs am Schwingungserzeuger. Damit wird wiederum ein besonders einfach aufgebautes und damit kostengünstiges Reinigungsgerät, insbesondere Schallzahnbürste erreicht, da keine separaten Befestigungsmittel vorgesehen sein müssen.

In Varianten kann eine Verdrehsicherung auch über eine Aussenkontur des Bürstenkopfs im Bereich des Adapters erreicht werden. Dazu kann die Aussenkontur in einer entsprechend geformten Ausnehmung eines Gehäuses des Schwingungserzeugers aufgenommen sein. Weiter kann der Bürstenkopf auch über einen Schraubverschluss mit einer Arretierung mit dem Gehäuse verbindbar sein.

Vorzugsweise ist die Fixierung in der Adapterachse durch eine Rastnase des Adapters ausgebildet, welche in eine Nut des Stifts einrastbar ist. Damit wird eine besonders einfach axiale Fixierung des Bürstenkopfs am Stift erreicht. Die Rastnase kann dazu zum Beispiel an der Innenseite einer seitlich geschlitzten Hülse ausgebildet sein.

Alternativ kann der Bürstenkopf auch über eine Rastnase an einem Gehäuse des Schwingungserzeugers einrastbar sein. Weiter kann statt der Rastnase auch ein Reibschluss vorgesehen sein, um eine Fixierung in der Adapterachse zu erreichen. Der Reibschluss müsste jedoch derart ausgebildet sein, dass beim Betrieb des Reinigungsgeräts, insbesondere der Schallzahnbürste der Bürstenkopf sich nicht vom Stift lösen kann.

Bevorzugt ist die Verdrehsicherung durch eine seitliche Abflachung des Stifts sowie durch eine entsprechende Form des Adapters ausgebildet. Auch damit wird eine besonders einfache und kostengünstige Befestigung des Bürstenkopfs am Stift erreicht.

In Varianten kann auch die Verdrehsicherung zwischen dem Bürstenkopf und einem Gehäuse des Schallerzeugers erreicht werden.

Bevorzugt weist der Stift am distalen Ende, im Anschluss an die Nut, die Abflachung auf.

In Varianten kann eine Abflachung auch in einem mittleren Bereich seitlich des Stifts ausgebildet sein. Damit könnte die Abflachung sowohl als Verdrehsicherung als auch als Aufnahme für eine Rastnase dienen.

Vorzugsweise ist die Rotationsbewegung der Welle (140) eine Schwingungsbewegung mit einer Schwingungsfrequenz zwischen 100 Hertz und 500 Hertz, vorzugsweise zwischen 180 Hertz und 300 Hertz. Damit wird eine besonders effiziente Reinigung erreicht. Alternativ kann die Schwingungsfrequenz auch kleiner als 100 Hertz oder grösser als 500 Hertz sein. Die ideale Schwingungsfrequenz hängt unter anderem von dem Abstand des Endes des Reinigungselements von der Rotationsachse und damit von der Länge des Reinigungselements, von einem Knickwinkel des Bürstenhalses etc. ab.

In einer bevorzugten Ausführungsform ist ein Schalter am Griff vorgesehen, der eine lineare Schwingbewegung in X-Richtung der Welle (Bürstenlängsrichtung) erzeugt. Damit kann zusätzlich zur Wischbewegung des Bürstenkopfs, die in Richtung Y-Achse (also quer zur X-Achse) verläuft, eine Translationsbewegung in der X-Achse erreicht werden. In der Überlagerung der beiden Bewegungen kann damit eine kreisende Bewegung erreicht werden, wie sie von renommierten Zahnärzten empfohlen wird. In Varianten kann auf den Schalter verzichtet werden. Weiter kann der Griff derart ausgebildet sein, dass eine permanente Überlagerung der Rotationsschwingung mit der Translationsschwingung erfolgt. Die Kreisbewegung kann auch anderweitig erreicht werden, zum Beispiel durch eine geeignete Unwucht beim piezoelektrischen Antrieb respektive durch eine asymmetrische Kopplung des Verbindungselements an die rotierbare Welle oder durch die Wahl eines Knicks im Bürstenhals.

In einer bevorzugten Ausführungsform umfasst ein Reinigungsgerät, insbesondere eine Schallzahnbürste einen solchen Griff und einen Bürstenkopf.

Vorzugsweise umfasst die Welle einen Stiftabschnitt zum Einführen in einen Adapter des Bürstenkopfs, wobei mit dem Stiftabschnitt, insbesondere ausschliesslich mit dem Stiftabschnitt, eine Schwingung der Welle zu einem Reinigungselement des Bürstenkopfs übertragbar ist. Dadurch kann gezielt der Bürstenkopf in eine Schwingung versetzt werden, womit eine besonders energieeffiziente Schallzahnbürste zur Durchführung einer besonders effektiven Reinigung, insbesondere Zahnreinigung erreicht werden kann.

Vorzugsweise umfasst der Bürstenkopf einen Bürstenhals, wobei der Bürstenhals in einem distalen Bereich ein Reinigungselement mit einer Ausrichtungsachse, insbesondere mehrere Filamente, bevorzugt zur Reinigung von Zähnen; und

a. in einem proximalen Bereich einen Adapter mit einer Adapterachse zur Kopplung des Bürstenkopfs mit einem Schwingungserzeuger und zur Übertragung von Schwingungen des Schwingungserzeugers zum Reinigungselement, umfasst; und wobei

b. die Adapterachse mit der Ausrichtungsachse einen Winkel grösser 90°, vorzugsweise einen Winkel von 91° bis 120°, weiter vorzugsweise einen Winkel von 95° bis 105°, besonders bevorzugt einen Winkel von 98° bis 102° einschliesst.

Damit wird ein Reinigungsgerät, insbesondere eine Schallzahnbürste erreicht mit welcher ein besonders effizientes Reinigen, insbesondere der Zähne erreicht werden kann.

Der Knick in Richtung des Reinigungselements (d. h. nach vorne) erlaubt eine bessere Zugänglichkeit vor allem bei der Innenseite der unteren Frontzähne. Weiter schwingt damit das Reinigungselement, respektive die Filamente seitlich stark aus, so dass insbesondere im Unterkiefer eine wesentlich bessere Reinigung erzielt werden kann. An den Borsten gemessen wird zudem eine grössere Amplitude erreicht, so dass innerhalb der Schwingungsbewegung mit grösseren Bewegungen gereinigt werden kann. Weist der Knick in entgegengesetzter Richtung (nach hinten), erlaubt er wiederum ein optimales Reinigen in den Zahnzwischenräumen. Auch in dieser Ausführungsform treten die obengenannten Effekte auf.

Offensichtlich werden die Schwingungen durch das abgewinkelte Reinigungselement derart optimal übertragen, dass eine verbesserte Reinigungswirkung mit der Schallzahnbürste erreicht werden kann. Durch die Wahl des Winkels zwischen der Adapterachse und der Ausrichtungsachse grösser 90°, vorzugsweise zwischen 91° bis 120°, weiter vorzugsweise zwischen 95° bis 105°, besonders bevorzugt zwischen 98° bis 102° wird zudem erreicht, dass der Bürstenkopf insbesondere angetrieben durch den piezoelektrischen Antrieb, in eine Kreisbewegung versetzt werden kann. Damit wird eine besonders ideale Reinigung von Zähnen erreicht. Die Kreisbewegung ist seit Jahrzehnten als besonders effektiv bekannt und wird von zahlreichen namhaften Zahnärzten empfohlen.

Es hat sich zudem in einer Vielzahl von Experimenten gezeigt, dass der optimale Winkel zwischen der Ausrichtungsachse und der Adapterachse einen Winkel von 91° bis 120°, vorzugsweise einen Winkel von 95° bis 105°, besonders bevorzugt einen Winkel von 98° bis 102° einschliesst. Dieser Winkel liegt typischerweise, aber nicht zwangsläufig, auch als Knick im Bürstenhals vor.

Die Ausrichtungsachse ist vorliegend als Achse des Reinigungselements zu verstehen. Bei einer herkömmlichen Zahnbürste bezeichnet diese eine Achse eines Filaments. Bei mehreren Filamenten, welche zum Beispiel auf einer gewölbten Fläche angeordnet sind, wird mit der Ausrichtungsachse ein Mittelwert der einzelnen Achsen verstanden. Anderseits kann die Ausrichtungsachse aber bei einer einzelnen Borste zur Reinigung der Zahnzwischenräume auch als eine Drahtrichtung bezeichnet werden, an welchem rundum die Filamente befestigt sind.

Das Reinigungselement kann sowohl einen Winkel von 91° bis 120° als auch einen komplementären Winkel von 60° bis 89° aufweisen. Ob das Reinigungselement nach vorne (Winkel kleiner 90°) oder nach hinten (Winkel grösser 90°) abgeknickt ist, hängt von der Art des Reinigungselements ab. Wird zum Beispiel ein Bürstenkopf mit mehreren Filamentbüscheln eingesetzt, dann weist der Knick vorzugsweise einen Winkel kleiner als 90° auf - das Reinigungselement ist damit nach innen, hin zum Bürstenhals gebogen, womit ideal die Innenseite der unteren Frontzähne erreicht werden kann.

Wird jedoch ein einzelner Filamentbüschel, zum Beispiel zur Reinigung der Zahnzwischenräume eingesetzt, so weist der Knick vorzugsweise einen Winkel grösser 90° auf, womit das Reinigungselement nach hinten, vom Bürstenhals weg geknickt ist. Diese Anordnung ist besonders ergonomisch für die Reinigung entlang der Kontur der Zahnhälse respektive des Zahnfleischs. Bevorzugt ist deshalb das Reinigungselement auf einer dem eingeschlossenen Winkel gegenüberliegenden Seite des zweiten Abschnitts angeordnet. Damit weist der Knick nach hinten, so dass das Reinigungselement vom ersten Abschnitt weg weist.

Vorzugsweise weist der Bürstenhals einen ersten Abschnitt umfassend den Adapter sowie einen zweiten Abschnitt umfassend das Reinigungselement auf, wobei eine erste Hauptachse des ersten Abschnitts und eine zweite Hauptachse des zweiten Abschnitts einen Winkel von 150° bis 179°, vorzugsweise einen Winkel von 165° bis 175°, besonders bevorzugt einen Winkel von 169° bis 171° einschliessen.

In Varianten kann der Bürstenhals auch eine anderweitige Form aufweisen, welche nicht direkt die Wirkungslinie des Adapters wiederspiegelt. Dem Fachmann ist eine Vielzahl von solchen Formen bekannt.

In einer besonders bevorzugten Ausführungsform sind die zweite Hauptachse und die Ausrichtungsachse zueinander rechtwinklig orientiert. In Varianten können aber auch andere Orientierungen zwischen den beiden Achsen vorliegen.

Bevorzugt weist das Reinigungselement mehrere Filamentbüschel auf, wobei aussenliegende Filamentbüschel über innenliegende Filamentbüschel hinausragen. Damit weist das Reinigungselement vorzugsweise eine konkave Oberfläche auf. Es hat sich in Versuchen gezeigt, dass damit eine besonders gute Reinigungswirkung erzielt werden kann.

In Varianten können aber auch andere Anordnungen der Filamentbüschel vorgesehen sein. Insbesondere kann auch genau ein Filamentbüschel vorgesehen sein, welcher nicht zwingen eine konkave Oberfläche aufweisen muss.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1a    eine schematische Darstellung einer Seitenansicht eines piezoelektrischen Antriebs in einem spannungslosen Zustand;

Fig. 1b    eine schematische Darstellung einer Schnittbildes entlang der Linie A-A der Figur 1a;

Fig. 2a    eine schematische Darstellung einer Seitenansicht eines piezoelektrischen Antriebs bei angelegter Spannung;

Fig. 2b    eine schematische Darstellung einer Schnittbildes entlang der Linie A-A der Figur 2a; und

Fig. 3    eine schematische Darstellung einer Seitenansicht einer Schallzahnbürste umfassend einen Antrieb.

Fig. 4    eine schematische Darstellung der ersten Ausführungsform in Richtung der Längsrichtung auf den Adapter;

Fig. 5    eine schematische Darstellung eines Querschnittes entlang einer Längsachse durch den Adapter;

Fig. 6a    eine schematische Darstellung des Schwingungserzeugers mit dem Stift in einer Seitenansicht;

Fig. 6b    eine Darstellung gemäss Figur 6a um einen Winkel von 90° um eine Längsachse rotiert;

Fig. 7a    eine schematische Darstellung einer Seitenansicht einer Körperpflegegeräts; und

Fig. 7b    eine schematische Draufsicht auf ein Körperpflegegerät gemäss Figur 7a.

Grundsätzlich sind in den Figuren gleiche Teile mit gleichen Bezugszeichen versehen.

## Wege zur Ausführung der Erfindung

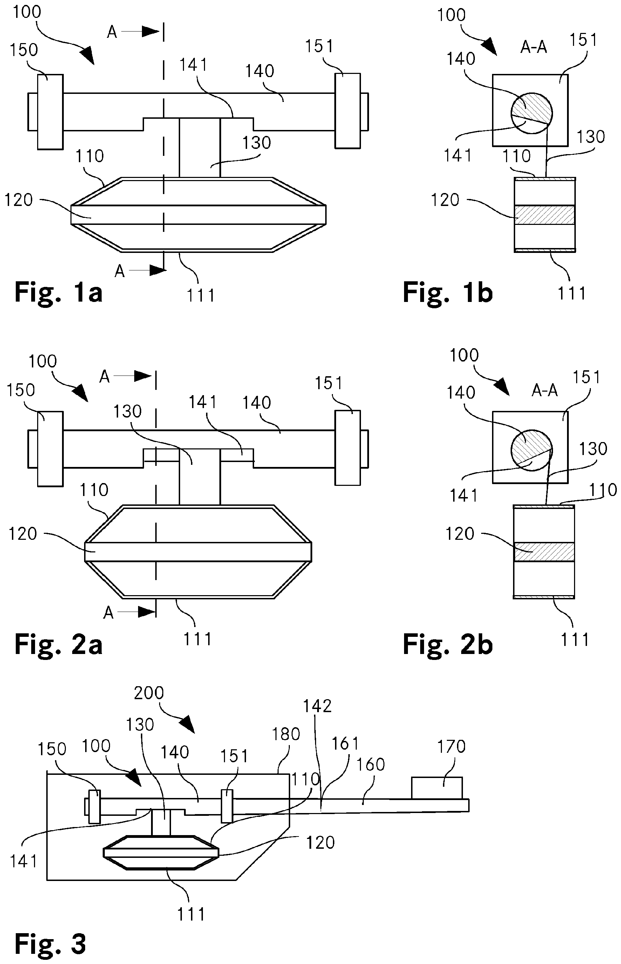

Die Figur 1a zeigt eine schematische Darstellung einer Seitenansicht eines piezoelektrischen Antriebs 100 in einem spannungslosen Zustand. Der piezoelektrische Antrieb 100 umfasst ein piezoelektrisches Element 120, welches an zwei gegenüberliegenden Seiten einen Federbügel 110 respektive 111 umfasst. Der Federbügel 110 als auch der Federbügel 111 bilden zusammen mit dem piezoelektrischen Element eine Trapezform. Die Federbügel 110 und 111 umfassen jeweils zwei Schenkel und eine Basisseite aus einem gebogenen Metallblech. Zwischen den Schenkeln ist das piezoelektrische Element 120 aufgenommen, welches eine grössere Länge aufweist als die Basisseite des Federbügels 110 respektive 111. Somit bildet das piezoelektrische Element 120 die längste Seite des durch das piezoelektrische Element 120 und den Federbügel 110 respektive 111 gebildeten Trapezes. Das piezoelektrische Element 120 ist parallel zu den Basisseiten der beiden Federbügel 110 und 111 ausgerichtet.

Bei einer Beaufschlagung des piezoelektrischen Elements 120 ändert sich die Länge in der X-Richtung zwischen den beiden Schenkeln des Federbügels 110 respektive 111. Damit ändert sich gleichzeitig ein Abstand zwischen der Basisseite und dem piezoelektrischen Element. Diese Änderung des Abstands wird als Bügelhub bezeichnet. Da nun zwei Federbügel 110 und 111 vorgesehen sind, wird durch das Beaufschlagen des piezoelektrischen Elements 120 mit einer Spannung ein doppelter Bügelhub zwischen den beiden Basisseiten der Federbügel 110 und 111 erreicht. Weiter werden durch die Anordnung zweier Federbügel 110 und 111 an gegenüberliegenden Seiten des piezoelektrischen Elements 120 Biegekräften verringert und somit das piezoelektrische Element geschont.

Parallel zum piezoelektrischen Element 120 ist eine Welle 140 angeordnet, welche in zwei zueinander beabstandeten Wellenlagern 150 und 151 rotierbar gelagert ist. Die Welle 140 weist in einem mittleren Bereich einen Ausschnitt 141 auf, welcher im Querschnitt der Welle 140 die Form eines Kreissegments aufweist. Die Höhe des Kreissegments ist vorliegend geringer als der Radius der Welle 140 - in anderen Ausführungsformen kann die Höhe aber auch gleich oder grösser als der Radius der Welle 140 sein.

Die Basisseite des Federbügels 110 ist über ein als Federblech 130 ausgebildetes Verbindungselement mit dem Ausschnitt 141 der Welle verbunden. Eine Ebene des Federblechs 130 verläuft parallel zur Rotationsachse der Welle 140. Das Federblech 130 ist exzentrisch, das heisst vorliegend im Randbereich des Ausschnitts 141 mit der Welle 140 verbunden (siehe unten, Figur 1b). Bei einer Längenänderung des piezoelektrischen Elements 120 wird nun ein Bügelhub mit den beiden Federbügeln 110 und 111 erzeugt, womit über das Federblech 130 die Welle 140 in eine Rotationsbewegung versetzt wird.

Die Figur 1b zeigt eine schematische Darstellung einer Schnittbildes entlang der Linie A-A der Figur 1a. Darin ist zusätzlich ersichtlich, dass das Federblech 130 im Randbereich des Ausschnittes 141 der Welle 140 angreift und so bei einer Hubbewegung der Federbügel 110 und 111 die Welle 140 in eine Rotationsbewegung versetzen kann.

Die Figur 2a zeigt eine schematische Darstellung einer Seitenansicht des piezoelektrischen Antriebs gemäss Figur 1a, bei angelegter Spannung. Im Unterschied zur Figur 1a ist nun das piezoelektrische Element 120 in einer X-Richtung parallel zur Rotationsachse der Welle 140 verkürzt. Damit vergrössert sich der Abstand zwischen den beiden Basisseiten der Federbügel 110 und 111, womit wiederum das Federblech 130 in Richtung der Welle 140 bewegt wird und damit die Welle 140 in eine Rotationsbewegung versetzt. Die Basisseite des Federbügels 111 ist vorliegend relativ zur Welle 140 fix angeordnet.

Die Figur 2b zeigt eine schematische Darstellung einer Schnittbildes entlang der Linie A-A der Figur 2a und zeigt gegenüber der Figur 1b die Rotation der Welle 140 aufgrund des Bügelhubes der beiden Federbügel 110 und 111.

Der piezoelektrische Antrieb kann für eine Vielzahl an Anwendungen eingesetzt werden. In einer bevorzugten Anwendung wird der Antrieb in einer elektrischen Zahnbürste, vorzugsweise in einer Schallzahnbürste eingesetzt. Die Figur 3 zeigt eine schematische Darstellung einer Seitenansicht einer Schallzahnbürste 200 umfassend einen Antrieb 100 gemäss der Figur 1a. Die Welle 140 umfasst auf der dem Lager 150 gegenüberliegenden Seite des Lagers 151 einen Adapter 142, an welchem ein Bürstenhals 160 über ein zum Adapter 142 passendes Gegenstück 161 rotationsfest befestigt werden kann. An einem proximalen Bereich umfasst der Bürstenhals 160 ein Borstenfeld 170. Wird nun das piezoelektrische Element 120 abwechselnd mit einer Spannung beaufschlagt, oszillieren die beiden Federbügel 110 und 111, womit wiederum über das Federblech 130 die Welle 140 in eine rotierende Oszillation versetzt wird. Diese wird von der Welle 140 an den Bürstenhals 160 übertragen, womit schliesslich das Borstenfeld 170 in eine Schwingung respektive Wischbewegung um die Bürstenhalsachse versetzt wird.

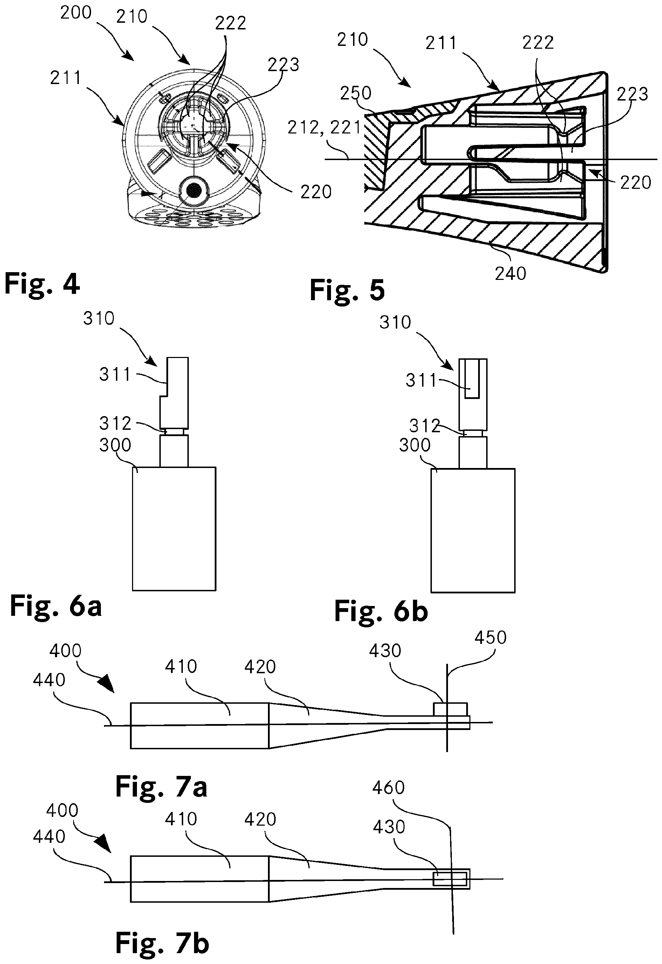

Die Figur 4 zeigt eine schematische Darstellung einer Ausführungsform eines Bürstenhalses 210 in Längsrichtung als Draufsicht auf den Adapter. Dabei ist ersichtlich, dass der Adapter 220 im Wesentlichen kreiszylindrisch ausgebildet ist. Der Adapter 220 weist vier Rastnasen 222 auf, welche jeweils durch einen Schlitz 223 unterbrochen sind.

Die Figur 5 zeigt den Adapter 220 als eine schematische Darstellung eines Querschnittes entlang einer Längsachse.

Der Adapter 220 dient zur Aufnahme eines Stifts 310 mit einer Abflachung 311 und einer Nut 312 (siehe Figuren 6a, 6b). Dazu weist der Adapter 220 eine im Wesentlichen kreiszylindrische Aufnahme auf, welche im Aufnahmengrund eine seitliche Abflachung sowie Rastnasen 222 aufweist. Die Aufnahme weist im Wesentlichen eine Form eines Zylindermantels auf, welcher in Öffnungsrichtung mindestens einen seitlichen Schlitz 223 sowie nach innen ragende Rastnasen 223 aufweist. Auf Grund des Schlitzes 223 ist die Aufnahme im Randbereich und damit die Rastnase 223 federnd ausgebildet. Die seitliche Abflachung im Aufnahmengrund dient zur Aufnahme des seitlich abgeflachten Endbereichs des Stiftes 310. Schliesslich ist der Adapter 220 derart ausgebildet, dass der Stift 310 zusätzlich über Reibschluss gehalten werden kann, so dass eine Schwingungsübertragung nicht beeinträchtigt wird.

Die Figur 6a zeigt eine schematische Darstellung des piezoelektrischen Antriebs 300 mit dem Stift 310 in einer Seitenansicht. Die Figur 6a zeigt schliesslich eine Darstellung gemäss der Figur 6a, jedoch um einen Winkel von 90° um eine Längsachse rotiert.

Der piezoelektrische Antrieb 300 überträgt die Schwingung an den Stift 310, welcher fix mit dem piezoelektrischen Antrieb 300 verbunden ist. Der Bürstenkopf 200 wird vorzugsweise lediglich über diesen Stift 310 mit dem piezoelektrischen Antrieb 300 verbunden. In einem distalen Bereich weist der Stift 310 eine Abflachung 311 auf. Weiter weist der Stift 310 eine Nut 312 zur Aufnahme der Rastnasen 222 auf. Der Stift 310 und der Adapter 220 sind derart ausgebildet, dass der Stift 310 durch die Abflachung 311 verdrehgesichert und durch die Nut 312 respektive die Rastnase 222 axial gesichert gehalten werden kann. Weiter kann der Stift 310 auch zusätzlich über Reibschluss im Adapter 220, 220 gehalten sein, so dass eine Schwingungsübertragung nicht beeinträchtigt wird.

Der piezoelektrische Antrieb 300 ist vorliegend schemenhaft dargestellt. Typischerweise ist dieser in einem Gehäuse verbaut, welches ergonomisch vom Benutzer ergriffen werden kann und welches weitere Bauteile wie den Akkumulator, ein Netzteil, Steuergeräte, Anzeigen für den Benutzer etc. umfassen kann.

Die Figur 7a zeigt eine schematische Darstellung einer Seitenansicht einer Körperpflegegeräts. Das Körperflegegerät ist vorliegend ausgebildet als Körperpflegegerät 400 mit einem Handgriff 410 und einem vorliegend auswechselbaren Bürstenaufsatz 420 mit einer Bürste 430. Im Handgriff 410 ist ein piezoelektrischer Antrieb (nicht dargestellt) angeordnet, welcher eine Rotationsschwingung um die X-Achse 440 erzeugt, welche auf den Bürstenaufsatz 420 übertragen wird. Damit führt der Bürstenaufsatz 420 im Betrieb relativ zum Handgriff 410 eine Rotationsschwingung um die X-Achse 440 aus. Aufgrund der durch das Borstenfeld 430 erzeugten Unwucht kann eine Bewegungskomponente in der Y-Richtung 450 und/oder in die Z-Richtung 460 (siehe unten, Figur 7b) erreicht werden. Dieser Effekt kann zum Beispiel durch einen Knick im Bürstenhals oder eine sonstige geeignete Massenverteilung (z.B. auch durch Anbringen von Gewichten oder der gezielten Einbringung von Hohlräumen) erreicht werden.

Die Figur 7b zeigt eine schematische Draufsicht auf ein Körperpflegegerät gemäss Figur 7a. In dieser Darstellung ist die Z-Richtung 460 ersichtlich. Zusammenfassend ist festzustellen, dass erfindungsgemäss ein piezoelektrischer Antrieb geschaffen wird, mit welchem eine Längenänderung eines piezoelektrischen Elements in eine Rotationsbewegung versetzbar ist, wobei sich der piezoelektrische Antrieb durch besonders kompakte Abmessungen und gleichzeitig relativ hohes Drehmoment auszeichnet.

## Patentansprüche

1. Piezoelektrischer Antrieb (100) zur Erzeugung einer Rotationsbewegung, insbesondere zur Erzeugung einer Rotationsschwingung, umfassend ein piezoelektrisches Element (120), womit bei elektrischer Aktivierung eine Längenänderung in einer X-Richtung erfolgt, wobei am piezoelektrisches Element (120) ein erster Federbügel (110) derart angebracht ist, dass die Längenänderung in einen ersten Bügelhub in einer Y-Richtung umgesetzt ist, wobei der erste Federbügel (110) über ein Verbindungselement (130) derart mit einer rotierbaren Welle (140) verbunden ist, dass der erste Bügelhub in eine Rotationsbewegung der Welle (140) umgesetzt ist.

2. Piezoelektrischer Antrieb (100) nach Anspruch 1, **dadurch gekennzeichnet, dass** die Welle (140) eine Rotationsachse aufweist, welche in einer zur x-Richtung parallelen Ebene liegt, vorzugsweise parallel zur X-Richtung ausgerichtet ist.

3. Piezoelektrischer Antrieb (100) nach Anspruch 1 oder 2, **dadurch gekennzeichnet, dass** gegenüber dem ersten Federbügel (110) am piezoelektrischen Element (120) ein zweiter Federbügel (111) vorgesehen ist.

4. Piezoelektrischer Antrieb (100) nach Anspruch 3, **dadurch gekennzeichnet, dass** der erste Federbügel (110), insbesondere der erste Federbügel (110) und der zweite Federbügel (111), zwei Schenkel umfasst, welche eine Basisseite einschliessen, wobei eine Länge des piezoelektrischen Elements (120) grösser ist als die Basisseite.

5. Piezoelektrischer Antrieb (100) nach Anspruch 4, **dadurch gekennzeichnet, dass** die Basisseite parallel zur X-Richtung ausgerichtet ist.

6. Piezoelektrischer Antrieb (100) nach einem der Ansprüche 1 bis 5, **dadurch gekennzeichnet, dass** das Verbindungselement (130) eine Feder umfasst.

7. Piezoelektrischer Antrieb (100) nach Anspruch 6, **dadurch gekennzeichnet, dass** die Feder als Federblech ausgebildet ist.

8. Piezoelektrischer Antrieb (100) nach Anspruch 7, **dadurch gekennzeichnet, dass** das Federblech exzentrisch mit der Welle (140) fest verbunden ist.

9. Griff mit einer Antriebseinheit für Körperpflegegeräte, insbesondere Reinigungsgeräte für Hautpflege und Zahnpflege, umfassend ein piezoelektrisches Element (120), womit bei elektrischer Aktivierung eine Längenänderung in einer X-Richtung erfolgt, und ein Umlenkgetriebe, wobei die Längenänderung des piezoelektrischen Elements (120) über das Umlenkgetriebe in eine Rotationsbewegung einer Welle (140) für einen Bürstenkopf umgesetzt ist, wobei die Welle insbesondere in der X-Richtung ausgerichtet ist.

10. Griff nach Anspruch 9, **dadurch gekennzeichnet, dass** das Umlenkgetriebe am piezoelektrischen Element (120) einen ersten Federbügel (110) umfasst, womit die Längenänderung in einen ersten Bügelhub in eine Y-Richtung umsetzbar ist, und wobei der erste Federbügel (110) über ein Verbindungselement (130) derart mit der Welle (140) verbunden ist, dass der erste Bügelhub in eine Rotationsbewegung der Welle (140) umsetzbar ist.

11. Griff nach Anspruch 10, **dadurch gekennzeichnet, dass** das Verbindungselement (130) fest mit der Welle (140) exzentrisch verbunden ist.

12. Griff nach Anspruch 10 oder 11, **dadurch gekennzeichnet, dass** das Verbindungselement (130) eine Feder, vorzugsweise ein Federblech umfasst.

13. Griff nach einem der Ansprüche 10 bis 12, **dadurch gekennzeichnet, dass** die Welle (140) einen Stiftabschnitt zum Einführen in einen Adapter eines Bürstenkopfs umfasst.

14. Griff nach einem der Ansprüche 9 bis 13, **dadurch gekennzeichnet, dass** die Rotationsbewegung der Welle (140) eine Schwingungsbewegung mit einer Schwingungsfrequenz zwischen 100 Hertz und 500 Hertz, vorzugsweise zwischen 180 Hertz und 300 Hertz ist.

15. Griff nach einem der Ansprüche 9 bis 14, **dadurch gekennzeichnet, dass** ein Schalter vorgesehen ist, der eine lineare Schwingbewegung in X-Richtung der Welle erzeugt.

16. Schallzahnbürste umfassend einen Griff nach einem der Ansprüche 9 bis 15 und einen Bürstenkopf.

17. Schallzahnbürste nach Anspruch 16, **dadurch gekennzeichnet, dass** die Welle (140) einen Stiftabschnitt zum Einführen in einen Adapter des Bürstenkopfs umfasst, wobei mit dem Stiftabschnitt, insbesondere ausschliesslich mit dem Stiftabschnitt, eine Schwingung der Welle (140) zu einem Reinigungselement des Bürstenkopfs übertragbar ist.

18. Schallzahnbürste nach Anspruch 16 oder 17, **dadurch gekennzeichnet, dass** der Adapter (120, 220) und der Stift (310) derart ausgebildet sind, dass bei in den Adapter (120, 220) eingeführtem Stift (310) eine Verdrehsicherung und/oder eine Fixierung in der Adapterachse (221) erreichbar sind.

19. Schallzahnbürste nach Anspruch 18, **dadurch gekennzeichnet, dass** die Fixierung in der Adapterachse (221) durch eine Rastnase (222) des Adapters (220) ausgebildet ist, welche in eine Nut (312) des Stifts (310) einrastbar ist.

20. Schallzahnbürste nach Anspruch 18 oder 19, **dadurch gekennzeichnet, dass** die Verdrehsicherung durch eine seitliche Abflachung (311) des Stifts (310) sowie durch eine entsprechende Form des Adapters (220) ausgebildet ist.

21. Schallzahnbürste nach Anspruch 19 und 20, **dadurch gekennzeichnet, dass** der Stift (310) am distalen Ende, im Anschluss an die Nut (312), die Abflachung (311) aufweist.

22. Schallzahnbürste nach einem der Ansprüche 16 bis 21, **dadurch gekennzeichnet, dass** der Bürstenkopf einen Bürstenhals (210) umfasst, wobei der Bürstenhals (210) in einem distalen Bereich ein Reinigungselement mit einer Ausrichtungsachse, insbesondere mehrere Filamente zur Reinigung von Zähnen; und

    a. in einem proximalen Bereich einen Adapter (220) mit einer Adapterachse (221) zur Kopplung des Bürstenkopfs (200) mit einem Schwingungserzeuger (300) und zur Übertragung von Schwingungen des Schwingungserzeugers (300) zum Reinigungselement, umfasst; **dadurch gekennzeichnet, dass**
    b. die Adapterachse (221) mit der Ausrichtungsachse (231) einen Winkel grösser 90°, vorzugsweise einen Winkel von 91° bis 120°, weiter vorzugsweise einen Winkel von 95° bis 105°, besonders bevorzugt einen Winkel von 98° bis 102° einschliesst.

**Fig. 1a**

**Fig. 1b**

**Fig. 2a**

**Fig. 2b**

**Fig. 3**

**Fig. 4**

**Fig. 5**

**Fig. 6a**

**Fig. 6b**

**Fig. 7a**

**Fig. 7b**

Europäisches
Patentamt

European
Patent Office

Office européen
des brevets

**EUROPÄISCHER RECHERCHENBERICHT**

Nummer der Anmeldung

**EP 21 20 5649**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 608 900 A1 (NEC CORP [JP]; KOSHIN KOGAKU LTD [JP]) 3. August 1994 (1994-08-03) | 1,3,6-8 | INV. H02N2/04 A61C17/34 |
| Y | * Spalte 4, Zeilen 13-37; Abbildungen 2,3 * | 2,4,5 | |
| | ----- | | |
| A | DE 10 2014 115852 A1 (HALLA VISTEON CLIMATE CONTROL [KR]) 4. Mai 2016 (2016-05-04) * Absatz [0041]; Abbildungen 3a,b * | 1 | |
| | ----- | | |
| Y | CN 107 863 901 B (UNIV XI AN JIAOTONG) 12. März 2019 (2019-03-12) * Absätze [0031] - [0033]; Abbildungen 2,3 * | 2,4,5 | |
| | ----- | | |
| X | US 2005/037316 A1 (SHOLDER BRIAN DAVID [US]) 17. Februar 2005 (2005-02-17) | 9,13,14 | |
| A | * Absätze [0039] - [0051]; Abbildungen 1-4 * | 10-12,15 | |
| | ----- | | RECHERCHIERTE SACHGEBIETE (IPC) |
| A | WO 2006/016419 A1 (KAWAMURA HIDEO [JP]) 16. Februar 2006 (2006-02-16) * Absätze [0055] - [0057]; Abbildung 7 * | 16-22 | H02N A61C |
| | ----- | | |
| A | CN 207 412 255 U (ZHOU XING) 29. Mai 2018 (2018-05-29) * Absätze [0074] - [0084]; Abbildungen 2 - 2-2 * | 16-22 | |
| | ----- | | |
| A | WO 02/071970 A1 (BRAUN GMBH [DE]; HILSCHER ALEXANDER [DE] ET AL.) 19. September 2002 (2002-09-19) * Seite 5, Absatz 1 * | 16-22 | |
| | ----- | | |

Der vorliegende Recherchenbericht wurde für alle Patentansprüche erstellt

| Recherchenort | Abschlußdatum der Recherche | Prüfer |
|---|---|---|
| München | 26. Juli 2022 | Steiner, Markus |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**Siehe Ergänzungsblatt B**

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**Nummer der Anmeldung**

**EP 21 20 5649**

# MANGELNDE EINHEITLICHKEIT DER ERFINDUNG ERGÄNZUNGSBLATT B

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-8

   Piezoelektrischer Antrieb zur Erzeugung einer Rotationsschwingung, wobei eine Längenänderung eines piezoelektrischen Aktors über einen Federbügel und ein Verbindungselement in eine Rotationsbewegung einer Achse umgesetzt wird, wobei der Federbügel eine Bewegung des Aktors in X-Richtung in eine Bewegung in Y-Richtung umsetzt.
   ---

2. Ansprüche: 9-22

   Griff mit einer Antriebseinheit für Körperpflegegeräte, wobei eine lineare Bewegung eines piezoelektrischen Elements in X-Richtung über ein Umlenkgetriebe in eine Rotationsbewegung einer Welle umgesetzt wird.
   ---

ANHANG ZUM EUROPÄISCHEN RECHERCHENBERICHT
ÜBER DIE EUROPÄISCHE PATENTANMELDUNG NR.

EP 21 20 5649

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2022

| Im Recherchenbericht angeführtes Patentdokument | Datum der Veröffentlichung | Mitglied(er) der Patentfamilie | Datum der Veröffentlichung |
|---|---|---|---|
| EP 0608900 A1 | 03-08-1994 | EP 0608900 A1 | 03-08-1994 |
| | | JP H06281813 A | 07-10-1994 |
| | | US 5506920 A | 09-04-1996 |
| DE 102014115852 A1 | 04-05-2016 | DE 102014115852 A1 | 04-05-2016 |
| | | KR 20160051510 A | 11-05-2016 |
| CN 107863901 B | 12-03-2019 | KEINE | |
| US 2005037316 A1 | 17-02-2005 | KEINE | |
| WO 2006016419 A1 | 16-02-2006 | KEINE | |
| CN 207412255 U | 29-05-2018 | KEINE | |
| WO 02071970 A1 | 19-09-2002 | AT 377394 T | 15-11-2007 |
| | | AU 2001258277 B2 | 16-11-2006 |
| | | CA 2439556 A1 | 19-09-2002 |
| | | CN 1518433 A | 04-08-2004 |
| | | CY 1107183 T1 | 24-10-2012 |
| | | DK 1367958 T3 | 28-01-2008 |
| | | EP 1367958 A1 | 10-12-2003 |
| | | HK 1065461 A1 | 25-02-2005 |
| | | JP 4443116 B2 | 31-03-2010 |
| | | JP 2004524100 A | 12-08-2004 |
| | | KR 20040025668 A | 24-03-2004 |
| | | MX PA03007530 A | 12-12-2003 |
| | | PL 366147 A1 | 24-01-2005 |
| | | PT 1367958 E | 24-01-2008 |
| | | US 2005000044 A1 | 06-01-2005 |
| | | US 2005100867 A1 | 12-05-2005 |
| | | US 2006096046 A1 | 11-05-2006 |
| | | US 2008010771 A1 | 17-01-2008 |
| | | US 2008020352 A1 | 24-01-2008 |
| | | US 2010325822 A1 | 30-12-2010 |
| | | WO 02071970 A1 | 19-09-2002 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016011477, Schiffer
- EP 2454967 A1, Braun
- WO 2005046508 A1, Trisa
- JP H0443127 B, Kao
- US 2006168744 A1, Butler
- US 20120291212 A, Montagnino
- JP 2012161368 A, Sanion
- DE 29913406 U1, Rowenta
- US 6766548 B1, Rowenta
- WO 2013104020 A1, Erskine
- WO 2012151259 A1, Water Pik
- DE 4002199 A1